# EUROPEAN PATENT APPLICATION

(11) **EP 4 629 152 A1**
(43) Date of publication of application: **08.10.2025**
(21) Application number: 24168150.1
(22) Date of filing: 02.04.2024
(51) Int. Cl.: G06Q 20/36

(54) **MONETARY VALUE TOKEN DEVICE**

(71) Applicant: Giesecke+Devrient advance52 GmbH, 81677 München (DE)
(72) Inventor: Hupel, Lars, 81677 München (DE); Seidemann, Wolfram, 81677 München (DE)
(74) Representative: Giesecke+Devrient IP

(57) **Abstract**

The present invention is related to a monetary value token device including a token data structure, a provisioning method for such a device and a system including the monetary value token device.

The monetary token device (10), comprises:
a token data structure (14) including
a monetary value token (11) of a monetary value token transaction system (6).

The token data structure (14) further includes a transaction authentication token (12) of a separate authentication token transaction system (7).

The token data structure (14) enables the monetary value token device (10) to be alternatively used in a transaction (101) of the monetary value token transaction system (6) or in a transaction (201) of the separate authentication token transaction system (7)

## Description

The invention relates to a monetary value token device including a token data structure, a provisioning method for such a device and a system including the device.

In the field of digital money systems, including digital currency systems, account-based systems and token-based systems form well known different approaches.

Many of the recent account-based systems use blockchains, wherein ownership of the digital money is transferred within the blockchain, e.g. by changing the assignment from one account to another account.

In token-based digital money systems typically a monetary value token is transferred between secure transaction units. For example EP 3 671514 B1, WO 2020/212331 A1, WO 2021/170646 A1, WO 2023/011758 A1 and WO 2023/011761 A1 disclose different aspects of such systems.

In the field of credit cards it is well known to add an transaction authentication value to the credit card transaction. In most cases the transaction authentication value is generated in the credit card and generated for the current transaction. The transaction authentication value thus is a dynamic or transaction specific value. For a subgroup of credit card transactions, the concept of using pre-generated/ static transaction authentication values, which are also referred to as transaction authentication tokens, has been established. It is primarily used for credit card apps on mobile communication devices.

For digital money systems it has already been proposed to forward a credit card transaction request for selected credit card accounts from the credit card system to a digital money system, which then settles the requested transaction in corresponding accounts of the digital money system.

According to an object of the invention a monetary value token device shall be provided which improves security, preferably at the same time improving performance and/or flexibility, particularly in an offline scenario.

The above-identified objectives are solved with the features of the independent claims. Further advantageous embodiments are described in the dependent claims.

According to an aspect of the present invention, there is provided a monetary value token device comprising a token data structure including a monetary value token of a monetary value token transaction system.

The present token data structure further includes a transaction authentication token of a separate authentication token transaction system. The token data structure enables the monetary value token device to be alternatively used in a transaction of the monetary value token transaction system or in a transaction of the separate authentication token transaction system.

Typically, tokens of different transaction systems are not provided in a common data structure. In particular tokens of generally different token types, such as a monetary value token and a transaction authentication token, are not provided in a common data structure. Even if they would be provided in the same device, they would be stored separately and managed by separate units of the device, such as a monetary value token unit and a transaction authentication token unit of the device. The present token data structure is a common token data structure for the two different tokens of the separate transaction systems. The tokens preferably differ in token data elements and/or in (storage and/or transmission) token formats, particularly including the formatting for and/or in (stored and/or transmitted) token data elements.

The token data structure may also be referred to as a dual-use token data structure. Due to including the two tokens of both transaction systems, a transaction is generally possible in both transaction systems. The monetary value token can be used in a transaction of the monetary value token transaction system or the transaction authentication token can be used in a transaction of the separate authentication token transaction system.

A value of the monetary value token of the token data structure in particular corresponds to the overall value of the token data structure. Preferably, a maximum transaction value assigned to the transaction authentication token also corresponds to this value. Accordingly, the value of the token data structure (although comprising both tokens) is equal to the value of the monetary value token only. Hence, there is a difference between the present solution and providing both tokens independently, which would result in the sum of both values being available for transactions.

The transaction of the monetary value token transaction system and the transaction of the separate authentication token transaction system preferably are offline transactions. Hence, in the preferred embodiments the monetary value token device is particularly improving the security of offline transactions. A terminal accepting one of both tokens offline may select the token to accept from both tokens in the token data structure. It should be noted that both transaction systems would not need to support online transactions. However, at least the authentication token transaction system typically supports an online transaction with the transaction authentication token. The monetary value token transaction system may optionally also support an online transaction with the monetary value token of the token data structure.

For the present application an offline transaction is defined as a transaction which is performed offline. No online connection to the respective transaction system is required to complete the transaction (status of the payment is final/ accepted) and/or preferably both transaction participants (payer and payee/sender or receiver of the payment) are offline. Offline transactions are particularly performed locally without using a network used in online transactions in the respective transaction system, such as the internet and/or a mobile communication network.

Preferably, in the transaction at least one or both tokens of the token data structure are received or read by a (transaction) terminal device. The terminal device being adapted to locally read or receive the token from the monetary value token device.

In first variants the monetary value token device is a (monetary value token) voucher comprising the token data structure. The monetary value token voucher comprises the token data structure as a static token data structure. The token data structure preferably has a form readable by a terminal device and/or a user device. The monetary value token voucher in the transaction is used a passive device and/or at least one (or both) token(s) of the token data structure is (are) only read out from the voucher. The monetary value token voucher may be used in the transaction as a data source but is not adapted to perform a transaction. The user device and/or the terminal device being adapted to perform a transaction.

The token data structure preferably is included in the voucher in a visible or optically readable form. Particularly the token data structure may be printed on the voucher. It could e.g. have the form of a QR code or a barcode or other optically machine readable form. In an alternative, the token data structure may be included in a magnetically readable form and/or magnetically encoded form, preferably in a magnetized area and/or magnet stripe. The token data structure may also be included in the voucher in a electronically, preferably electromagnetically, readable form. The monetary value token voucher may be a RFID tag. The RFID tag only provides static data/ is not is not able to perform a transaction and/or may include a LF, HF or UHF RFID interface. The token data structure may be included in the voucher in two of these forms, e.g. optically and magnetically readable or optically and electronically readable.

In second variants the monetary value token device is a is a (monetary value token) transaction device, preferably adapted to perform at least a (the) monetary value token transaction with a terminal device. The monetary value token transaction device may e.g. at least comprise a processor unit, a memory unit and/or an interface unit. The monetary value token transaction device stores the token data structure, e.g. in the memory unit. The monetary value token transaction device preferably is (further) adapted to perform a transaction authentication token transaction with a terminal device or to provide the transaction authentication token for the terminal device.

At least one, preferably the transaction authentication token, and alternatively both, the monetary value token and the transaction authentication token, may be a one-time token(s) /token(s) usable in only a single transaction. In variants - after using a (first of both) token(s) of the token data structure in a first transaction of a first value - the other (second of both) token(s) of the token data structure may be used with a correspondingly reduced value (initial value of the other (both) token(s) reduced by the first value) in a second transaction and preferably in only a single second transaction. Preferably the other token of both tokens is the monetary value token.

In preferred variants the monetary value token device comprises a first access indicator, the first access indicator indicating if the token data structure is accessed, particularly read, for the first time or if the token data structure has been previously accessible, particularly readable. The first access indicator preferably being a visible and/or mechanical first access indicator and/or an electronic signal first access indicator. The first access indicator may be a removable seal or a removable layer, particularly optically or magnetically preventing access to the token data structure. The first access indicator may comprise a state changing layer, particularly a opacity/ colour changing layer, such as a photochromic, thermochromic or electrochromic layer, which irreversibly changes its state, particularly opacity/colour. The first access indicator may comprise a irreversibly movable or removable part of the monetary value token device. In particular electronic access to the token data structure may be irreversibly enabled by a visible and/or mechanical first access indicator. For example an antenna or an interface unit of the monetary value token device may be irreversibly activated by moving or removing a part of the monetary value token device, such as a visible seal and/or a conducting seal and/or a visible portion of the device substrate including an antenna shortcut, the part particularly being connected to an antenna or being an initial antenna part. An electronic signal first access indicator, particularly in a monetary value token RFID tag or a monetary value token transaction device, may indicate a first access and/or a previous non-accessibility in response to an access request (e.g. first access bit x of response equals 0 or 1 or response message or error message "subsequent access"). The at least one token or the token data structure may be included in the response or not (e.g. either regardless of a first access state or upon first access only).

The first access indicator, prior to a first access, may additionally prevent access to the token data structure and indicate that the token data structure has not been accessible (or accessed). The first access indicator, after a first access, indicates that the token data structure has been accessible (or has been accessed).

The monetary value token device may comprise an access limitator limiting access to the token data structure such that only either the monetary value token or the transaction authentication token of the token data structure can be accessed, and/or such that the time or number of subsequent accesses to the token data structure is limited.

The access limitator may be a visible and/or mechanical access limitator or an electronic access limitator, which optionally also forms the first access indicator. For example, a (re)movable seal may reveal only one of both tokens and destroy/irreversibly hide the other token. In another example, a state change layer reduces opacity for a given time and thereafter irreversibly returns to full opacity. RFID tags usually do not provide access limitation for the data stored in the RFID tag, but theoretically could be adapted to provide access limitation, particularly to one-time or one-session only access for the stored token data structure (as a whole). In a monetary value token transaction device, access to the token data structure can be limited as described above, e.g. to either-or access or to one-time or one-session access or to a access time frame after a first access.

Typically in the monetary value token transaction device access conditions to stored data may be set accordingly and/or will be controlled by the processor unit accordingly.

As partly already indicated, the monetary value token comprises a value data element indicating an initial value of the monetary value token (and the token data structure). The transaction authentication token can be used for a transaction in the separate authentication token transaction system having a maximum transaction value corresponding to the initial value. Hence, the value of an authentication token transaction may be identical to the initial value or lower than the initial value. After a first transaction, an authentication token transaction or a monetary token transaction, having a first transaction value was performed, in a monetary value token transaction device the token data structure is amended, basically in accordance with the first transaction value. If the first transaction value corresponds to the initial value, the token data structure is (both tokens are) invalidated or deleted.

If the first transaction value is lower than the initial value, in a first variant not only the used token of both tokens but also the other token in the token data structure is simply also deleted or invalidated in the monetary value token transaction device. In the first variant (or in case of a first transaction value corresponding to the initial value) the other token is typically fully cancelled in the respective other transaction system, e.g. after receipt of a cancellation message, particularly from the terminal device or from the transaction system of the first transaction.

In a second variant however, the monetary value token (transaction) device changes the value data element of the monetary value token to indicate a reduced value, corresponding to the initial value reduced by the transaction value. The monetary value token having the reduced value may be used in a second transaction. In the second variant the other token is typically only partially cancelled in the respective other transaction system, e.g. after receipt of a partial cancellation message, particularly from the terminal device or from the transaction system of the first transaction. The value of the other token in the other transaction system, preferably the monetary value transaction system, is set to the reduced value. The other token preferably remains marked as a linked token or a token from a dual-use token data structure in the other transaction system.

In a third variant the monetary value token (transaction) device stores the monetary value token of the token data structure as a normal token having the reduced value. The normal token of the reduced value is stored outside the token data structure and/or can be used in subsequent transaction(s). In the third variant the other token is also only partially cancelled in the respective other transaction system, e.g. after receipt of a partial cancellation message, particularly from the terminal device or from the transaction system of the first transaction. The value of the other token in the other transaction system, preferably the monetary value transaction system, is set to the reduced value. The other token in the other transaction system however now is changed to be a normal token. Hence, for example a link to the transaction system of the first transaction or a marker as a token from a dual-use token data structure may be removed. In subsequent transactions the normal token of the reduced value can be used as a normal token, e.g. spent partially in the subsequent transactions.

Preferably the token data structure comprises at least one system indicator data element indicating the separate authentication token transaction system and/or the monetary value token transaction system and/or an issuer indicator data element indicating an issuer of the token data structure. The overall system may comprise multiple authentication token transaction systems and/or multiple monetary value token transaction systems. Hence, token data structures of different system combinations may exist. Accordingly, the system indicator identifies the respective systems. For example in first, second and third token data structures of a monetary value token system, different indicators for first, second or third authentication token transaction systems may be included. An indicator of the a monetary value token system would be optional. In another example, token data structures may have a common authentication token transaction system (indicator thus optional) but different monetary value token systems (indicator included in the token data structure). The token data structure may be issued by one of the transaction systems, however alternatively multiple issuers may exist. Preferably, multiple monetary token value issuers exist within the monetary token value transaction system. The issuer of a token data structure (and preferably thus the issuer of the monetary value token) is identified in the issuer indicator.

The token data structure may comprise at least one pre-formatted transaction message including the monetary value token and/or the transaction authentication token. It can be helpful for the user device or the terminal device that the monetary value token device, which is unable to create transaction messages, e.g. in case of a monetary value token voucher, stores the token (or both tokens) within the pre-formatted transaction message (or respective pre-formatted transaction messages).

The monetary value token device may comprise one or more token data structures. Furthermore, the monetary value token device may comprise one or more normal monetary value tokens of the monetary value token transaction system. Normal monetary value token are not linked to a transaction authentication token. In particular, they are neither included in token data structure on the monetary value token device nor linked or marked accordingly in the monetary value token transaction system. The monetary value token device can comprise a monetary value token application of the monetary value token transaction system, preferably including the one or more normal monetary value tokens and/or the token data structure. The monetary value token application is adapted to store monetary value tokens (particularly directly or in token data structures) and/or to perform a transaction in the monetary value token transaction system in accordance to a transaction protocol of the monetary value token transaction system. The transaction protocol inter alia defines the transmission format for the monetary value token. The monetary value token device can comprise a transaction authentication token application of the separate authentication token transaction system, which preferably generates and/or provides one or more transaction authentication tokens. For the sake of clarity it is noted that the token data structure is a pure data structure and/or a dedicated token data structure. It thus does not comprise software code (such as an application). The (only) purpose of the token data structure is to provide both tokens. The token data structure may basically consist of the tokens and their meta-data (such as the above indicators or the initial value) and optionally structuring and/or formatting data (e.g. (X)ML or TLV or JSON or protocol related data). Furthermore, it could be highlighted that an approach to include two applications for the respective transaction systems in a transaction device clearly deviates from the present proposal.

A monetary value token, including the monetary value token in the token data structure and/or the normal monetary value token, typically comprises one or more of the following data elements: a value data element, a token owner secret, preferably a secret key of a key pair, a token reference, preferably derived from the token owner secret and/or a public key of a key pair, and a token issuer information.

A transaction authentication token, including the transaction authentication token in the token data structure and/or the normal transaction authentication token generated or provided by transaction authentication token application, typically comprises an account number, such as a PAN (primary account number), preferably a derived account number or one-time account number, a system generated secret authentication value and a maximum transaction value.

The separate authentication token transaction system preferably is a credit card system. Accordingly, the transaction authentication token may be a credit card transaction authentication token. Furthermore, the account number may be a credit card number, preferably a derived credit card number or one-time credit card number.

The monetary value token transaction system preferably comprises one or more token issuers and/or a token reference register. For example WO 2021/170646 A1, WO 2023/011758 A1, WO 2023/011761 A1 and WO 2024/027869 A1 show details of possible monetary value token transaction systems.

According to another aspect of the present invention there is provided a secure (monetary token transaction) device, which may be a user device or a terminal device, comprising a dual use transaction unit adapted to use the token data structure provided by a monetary value token device, e.g. by a voucher or a transaction device, as described above. The dual use transaction unit is particularly adapted to store one or more token data structures and to alternatively use one of both tokens in a transaction and to perform monetary value token transactions and authentication token transactions. Optionally it is further adapted after the first transaction to store a reduced value token for the other transaction system and/or to send a (full or partial) cancellation message to the other transaction system.

According to still another aspect of the present invention there is provided a provisioning method comprising providing a monetary value token of a monetary value token transaction system to a monetary value token device. The monetary value token is provided in a token data structure further comprising a transaction authentication token of a separate authentication token transaction system. In a further step the monetary value token transaction system and/or the separate authentication token transaction system are prepared for the alternative use of the monetary value token and the transaction authentication token of the token data structure in a transaction.

The step of providing the (monetary value token in) token data structure may comprise locally adding the token data structure to a monetary value token device, e.g. by printing or magnetic encoding or local transmission. The step of providing the (monetary value token in) the token data structure may alternatively comprise transmitting the token data structure to a remote monetary value token (transaction) device.

In variants the method may comprise in the step of preparing: marking one or both tokens as a linked token and/or adding to one or both tokens a link to the token of the other transaction system respectively. Hence, the tokens may be marked as linked tokens or marked as tokens of the token data structure. For example in both systems the tokens may be linked to each other by adding a link to the token of the other system. In other variants a link is only stored in one of the systems. Basically, in further alternatives the link may not be stored in the system(s) but provided together with the first transaction - Preferably the link is provided based on the token data structure, implicitly including the link or explicitly including the link, e.g. in the form of a token reference data element or a link reference data element.

The step of preparing may also comprise: generating the monetary value token for the token data structure based on an existing monetary value token and/or registering at least the monetary value token for the token data structure by replacing a registered monetary value token. The monetary value token preferably is registered in a token (reference) register of the monetary value token transaction system. For example WO 2021/170646 A1, WO 2023/011758 A1, WO 2023/011761 A1 and WO 2024/027869 A1 show details of possible monetary value token transaction systems.

The step of preparing may also comprise: generating at least an authentication secret of the transaction authentication token in the separate authentication token transaction system, preferably the authentication secret is derived from an account number and/or an authentication secret generation key in the separate authentication token transaction system and/or a random number.

The steps of generating are preferably performed by a token issuer, more preferably by the token data structure issuer. The token data structure issuer may provide the token data structure. In alternatives the token data structure issuer receives at least one of both (or both) generated tokens.

At least the substeps of generating and the other substeps of preparing may be performed before the step of providing the token data structure. However, in alternatives a substep of registering or the substeps of marking and/or linking in the transaction systems are performed only after a step of providing the token data structure. In particular, the token data structure may be provided to the monetary value token device as a part of the production of the monetary value token device. The other preparation substeps may then be performed upon delivery or sale of the monetary value token device.

In further variants the method may (also) comprise after a use of one of both tokens of the token data structure in a first transaction, a transaction of the separate authentication token transaction system or a transaction of the monetary value token transaction system, cancelling an unused one of both tokens in the monetary value token transaction system or the separate authentication token transaction system respectively. Preferably fully cancelling the transaction authentication token or partially or fully cancelling the monetary value token. Cancelling the token in the system prevents its successful use in a further transaction. After partial cancellation the monetary value token is registered in the token (reference) register with a reduced value. It may be used in a single second transaction (if still linked/marked and thus being usable only once) or in subsequent transactions if the registration is changed (in the partial cancellation) into a registration of a normal monetary value token (unmarked/no link).

A cancellation message may be sent from the monetary value token transaction system to the separate authentication token transaction system or vice versa. Additionally or alternatively a cancellation message from a transaction device may be received in the monetary value token transaction system or the separate authentication token transaction system. The cancellation message may comprise the link, a link reference or a token identifier/ reference.

According to another aspect of the present invention there is provided a provisioning unit adapted to perform the above provisioning method. Preferably the provisioning unit is adapted to perform the method for different token issuers in the monetary value token transaction system.

A general (or overall) system may comprise: a monetary value token transaction system, a separate authentication token transaction system, and a monetary value token device as described above. Optionally, a secure device also described above and/or a provisioning unit may be part of the general system.

Finally, an aspect of the use of a first access indicator is emphasized which is applicable with or without the present data structure. It is provided an offline payment method using a monetary value token device having a, preferably visual, first access indicator, the monetary value token device including a monetary value token of a monetary value token transaction system, wherein the first access indicator indicates an un-accessed state of at least the monetary value token. The method comprises: transferring the monetary value token in an offline transaction of a monetary value token transaction system to a terminal device after a change of the first access indicator such that it indicates an accessibility, preferably a first access, of the monetary value token. The offline transaction comprises the change of the first access indicator, whereby the un-accessed state of the monetary value token is indicated in the offline transaction in addition to the transfer of the monetary value token from the monetary value token device to the terminal device.

Contrary to the typical use of a first access indicator prior to a transaction, the first access indicator is used within the transaction and thus avoids double-spending of monetary value tokens in the monetary value token transaction system. The offline transaction is performed only if the first access indicator initially in the offline transaction indicates the un-accessed state of at least the monetary value token. If the first access indicator initially in the transaction indicates accessibility of the monetary value token, the offline transaction is not performed (by the terminal device). The monetary value token device may be a voucher or a transaction device basically as described above - without however necessarily including the token data structure and/or the transaction authentication token. The monetary value token may be a normal monetary value token. The first access indicator may be adapted as described above, optionally however only indicating access for the monetary value token, e.g. the normal monetary value token or the monetary value token of the token data structure.

In the following, the invention or further embodiments and advantages of the invention are explained in more detail based on drawings, wherein the drawings describe only some of the possible embodiments of the invention. At least elements drawn with dashed lines are considered as optional elements.

The drawings are not to be regarded as true to scale, and individual elements of the drawings may be shown in exaggeratedly large or exaggeratedly simplified form.
Fig. 1 shows an example of a monetary value token device comprising a token data structure; and
Fig. 2 shows a secure transaction device and a second example of a monetary value token device comprising a token data structure and; and
Fig. 3 shows a provisioning unit and a further example of a monetary value token device comprising a token data structure and; and

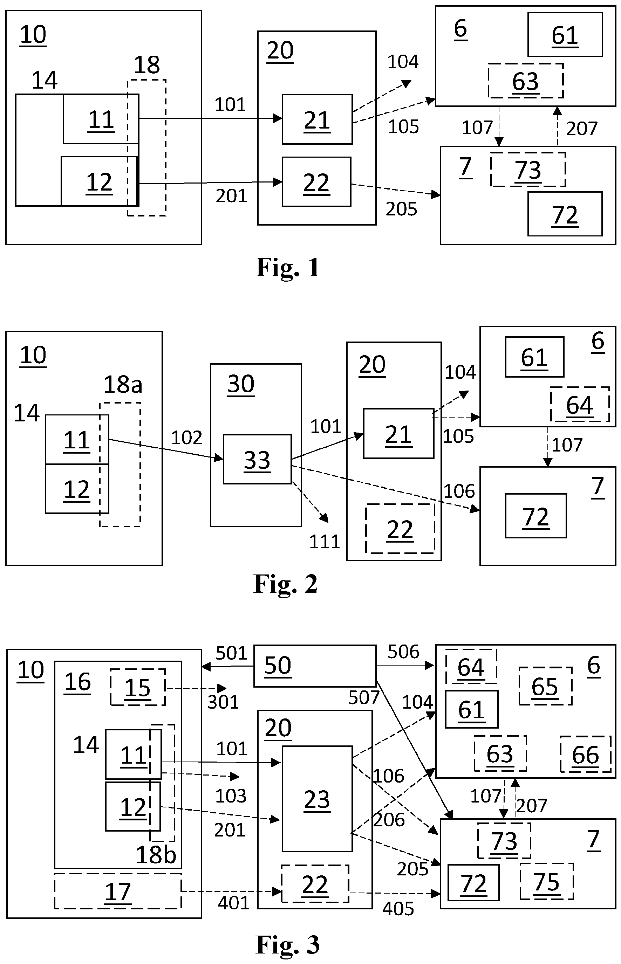

In Fig. 1 a monetary value token device 10 is illustrated, comprising a token data structure 14. The token data structure 10 comprises or basically consists of a monetary value token 11 and a transaction authentication token 12. The monetary value token 11 is a token of the monetary value token transaction system 6. The transaction authentication token 12 is a token of a separate authentication token transaction system 7. Although tokens 11, 12 of both transaction systems 6, 7 are included in the token data structure 14, only one of them will be used in a transaction 101, 201.

A transaction terminal 20 may comprise a monetary value token transaction unit 21 of the monetary value token transaction 6 and/or a transaction authentication token transaction unit 22 of the separate authentication token transaction system 7. The transaction terminal 20 receives or reads either the monetary value token 11 in a monetary value token transaction 101 or the transaction authentication token 12 in an authentication token transaction 201.

A first transaction value shall be paid to the terminal in the transaction 101 or 201. The token data structure 14 has an initial value. The value of the token data structure 14 corresponds to the value of the monetary value token 11 and to a maximum value of an authentication token transaction which can be authorized by the transaction authentication token 12. In the following it is assumed for Fig. 1 that the first transaction value is equal to the value of the token data structure 14.

The transaction 101, 201 is an offline transaction, the token 11, 12 being locally received or read by the terminal 20. The offline transaction 101, 201 is finally performed by the terminal 20 without requiring or using access to the transaction system 6, 7. The transaction units 21, 22 are adapted to perform the respective offline transaction 101, 201 of their transaction system 6, 7, however not adapted to handle the token 12, 11 of the other transaction system 7, 6. Usually they are also able to perform an online transaction in their system (not illustrated). In variants the transaction terminal 20 may decide whether to use the monetary value token 11 in an offline transaction 101 of transaction system 6 or the transaction authentication token 12 in an offline transaction 201 of transaction system 7.

A monetary value token registration 61 exists for the monetary value token 11 in the monetary value token transaction system 6. Preferably the monetary value token 11 is registered in a token reference register, which only includes token references but not the token, particularly not a secret data element of the token. Valid monetary value tokens of the monetary value token transaction system 6 are registered in the token (reference) register. Corresponding examples are described in WO 2021/170646 A1, WO 2023/011758 A1, WO 2023/011761 A1 and WO 2024/027869 A1. The monetary value token may be transferred in transactions between participants of the monetary value token transaction system 6.

Transaction authentication values of the authentication token transaction system 7, which preferably is a credit card system, typically are generated by participants of the transaction system 7 for a given transaction and authenticate the given transaction. One or few pre-generated transaction authentication values or transaction authentication tokens can for example be provided to less secure transaction devices. They can be used for a single transaction, wherein optionally a limitation of the transaction value approvable can be used. The authentication token transaction system 7 optionally comprises a registration 71 of the transaction authentication token 12 or a generation key for re-generating the transaction authentication token 12.

After the offline transaction 101 of the monetary value token transaction system 6, the transaction terminal 20 may - at a point of time independent from the transaction 101 - send a registration replacement request 104 or a redemption request to the monetary value token transaction system 6. When the monetary value token transaction system 6 is informed about the use of the monetary value token 11 of the data structure in the transaction 101, it (fully or partially) cancels the transaction authentication token 12 of the data structure 14 in the authentication token transaction system 7. The monetary value token transaction system 6 may send an authentication token cancellation message 107 to the authentication token transaction system 7. In Fig. 1 the authentication token transaction system 7 cancels the registration 72 of the transaction authentication token 12. The transaction systems 6,7, may comprise cancellation units 63, 73, particularly adapted to receive and process cancellation messages. A registration replacement request 104 requests to replace registration of at least one or more, particularly m, registered tokens by registration of one or more, particularly n, new tokens. The registration replacement request 104 preferably comprises (1 to) m registered token references and (1 to) n token references to be registered. In the registration replacement request 104 the (sum of the) value(s) of the registered tokens corresponds to (the sum of) the value(s) of the tokens to be registered. In response to a redemption request 105 of the transaction terminal 20, the value of the token(s) of the request is booked to a bank account of the transaction terminal 20 and the registration of the token(s) is deleted. Preferably, however the transaction terminal transfers the token(s) 11 to a transaction unit of a commercial bank (instead of sending a redemption request). The commercial bank after receipt of the token(s) books the corresponding value to the bank account of the transaction terminal 20. Preferably, the transaction unit of a commercial bank creates one or more new tokens and sends a registration replacement request to a token (reference) register of the monetary value token transaction system 6.

After the offline transaction 201 of the authentication token transaction system 7, the transaction terminal 20 may - at a point of time independent from the transaction 201 - send a transaction clearance request 205 for the offline transaction 201 to the authentication token transaction system 7. When the authentication token transaction system 7 is informed about the use of the authentication token 12 of the data structure 14 in the transaction 201, it (fully or partially) cancels the monetary value token 11 of the data structure 14 in monetary value token transaction system 6. The authentication token transaction system 7 may send a monetary value token cancellation message 207 to the monetary value token transaction system 6, preferably to its cancellation unit 63. In the example of Fig. 1 the authentication token transaction system 7 cancels the registration 61 of the monetary value token 11.

The monetary value token device 10 could be a voucher including a printed token data structure 14, e.g. in the form of a QR code or a machine readable data field. The printed token data structure 14 may comprise a sub-area for each token 11,12, e.g. two QR codes.

Visibility of the token data structure 14 may be initially prevented by a first access indicator 18, e.g. an opaque irreversibly removable seal or an opaque irreversibly removable layer or an opaqueness changing layer. Thus initially the token data structure 14 cannot be accessed, particularly due to the opaqueness. Reading of at least one of the tokens 11, 12 is prevented. In addition the first access indicator 18 indicates that no access has happened yet. So by at least partly irreversibly removing the first access indicator 18 or by changing the state of the first access indicator 18 irreversibly, at least one of the tokens 11, 12 or both tokens 11,12 become visible and thus can be read. The first access indicator 18 - being irreversibly removed or changed - from now on indicates that access was possible/may have occurred.

In preferred variants the first access indicator 18 can be removed from/changed for only one of both tokens. Removal from both tokens/their respective sub-areas would e.g. destroy the common part of the data structure 14 and/or irreversibly affects the substrate of the voucher. An irreversibly removable seal for example may comprise internal cuts, which are correspondingly arranged and/or may be partially fixed into the substrate.

The state of a first access indicator 18 may be visually checked prior to performing the transaction 101 or 201. If the first access indicator 18 of the monetary value token voucher 10 indicates that access was not possible yet (it may be partially or fully removed/changed and) the transaction 101 or 201 can be performed. If the first access indicator 18 of the monetary value token voucher 10 indicates that prior access was possible, the transaction 101 or 201 would not be performed by the transaction terminal 20.

Fig. 1 further indicates that token data structure 14 may comprise the token 11, 12 and associated meta-information such as a data element for the value of the token data structure 14 and/or a data element for a reference number of the token data structure 14 and/or structuring/formatting data, e.g. TLV or (X)ML or JSON data elements. Finally, the token data structure 14 may comprise the token 11 and/or the token 12 inside a transaction message format of the transaction system 6, 7 respectively.

Fig. 2 also shows a monetary token device 10, which may be a voucher (or not), a terminal device 20 and the transaction systems 6, 7. A user device 30 is additionally shown in Fig. 2. The following description focusses on the differences over Fig. 1 (modified or added aspects), which may however be used - isolated from each other or in combination - in Fig. 1 or 3 respectively also.

The user device 30 comprises a dual use transaction unit 33 being adapted to use the token data structure 14. User device 30 reads 102 the token data structure 14 from the monetary value token device 10. The dual use transaction unit 33 is generally able to use both tokens 11, 12 of the token data structure 14 in both transaction systems 6, 7. However, it will use only one of both tokens or will at least only use a reduced value in a subsequent transaction.

In the example of Fig. 2 the monetary value token 11 of the monetary value transaction system 6 is used in a first offline transaction 101 between the user device 30 and a terminal device 20.

The transaction value of the first offline transaction 101 may correspond to the value of the monetary value token. The monetary value token 11 thus can be transferred in the offline transaction 101 locally from the user device 30 to the terminal device 20. The dual use transaction unit 33 will delete or invalidate the token data structure 14/both tokens 11, 12 after the first transaction 101 (optionally after step 106).

The transaction value of the first offline transaction 101 may correspond to a first transaction value, which is lower than the value of the monetary value token. A monetary value token having the first transaction value is derived or split form the monetary value token 11 and can be transferred in the offline transaction 101 locally from the user device 30 to the terminal device 20. After the first offline transaction 101, the dual use transaction unit 33 will delete or invalidate the transaction authentication token 12. The dual use transaction unit 33, after the first offline transaction 101, stores a monetary value token having a reduced value, which corresponds to the initial value of the monetary value token 11 reduced by the first transaction value. Hence, the user device holds a monetary value token of a reduced value, which can be used in a subsequent offline or online transaction 111.

Of course, the user device 30 alternatively could have used the transaction authentication token 12 in a first offline transaction of the authentication token transaction system 6. Again a monetary value token of reduced value, e.g. by amending the value of the monetary value token 11, may be created after the first offline transaction.

Additional steps 104-107,111 may be performed later, at a point of time independent from the first transaction and at least partly independent from each other. For example, one or more subsequent (offline or online) transactions 111 may be performed, either using the monetary value token of the reduced value or a normal monetary value token (not linked to the authentication token transaction system 7) of the user device 30.

Later on, e.g. when being online, the user device 30, particularly the dual use transaction unit 33, optionally sends a cancellation message 106 to the other transaction system 7, 6. In the example of Fig. 2 the cancellation message 106 is sent to the authentication token transaction system 7. In the first and second of the above variants the cancellation message 106 preferably fully cancels the registration 72 of the transaction authentication token 12. In the above third variant a cancellation message would partially cancel the value of the registration 61 of monetary token value 11 in the monetary value token transaction system 6. A cancellation message 107, 207 may optionally additionally be sent between the transaction systems 6, 7 in each of the variants.

The monetary value token transaction system 6 may comprise a dual use (or token data structure) provisioning unit 64. The provisioning unit 64 may be adapted to issue monetary value token devices 10, e.g. for different monetary value token issuers in the monetary value token transaction system 6. The provisioning unit 64 may as well be adapted to prepare both transaction systems 6, 7 for the alternative use of the tokens 11, 12 of the token data structure 14 and/or to send token data structures to user devices 30 including a dual use transaction unit 33.

A (physical) first access indicator 18a of the monetary value token device 10 may exist. It could for example only visibly hide a part of the token data structure 14. Particularly it could initially hide both secret token data elements of the token 11, 12, whereas other data elements of the token data structure 14 are visible, such as the value and/or a reference number of the token data structure 14 and/or the value of both tokens 11, 12 and/or a token reference number of the monetary value token 11. Hence, removal or change of the first access indicator 18a reveals the initially visibly hidden part of the token data structure 14.

Finally turning to Fig. 3, this figure shows a monetary value token device 10 being a monetary value token transaction device and shows a separate provisioning unit 50. Again these differences and (related) aspects described in the following may be also applied in the other embodiments mentioned with respect to the other figures.

The monetary value token transaction device 10 comprises a monetary value token unit 16 and optionally an authentication token unit 17. The monetary value token unit 16 comprises one or more token data structures 14, optionally from different token data structure issuers. The monetary value token unit 16 is preferably adapted to use one of both tokens 11, 12 of the token data structure in a first offline transaction 101, 201. A terminal device 20 of the first offline transaction 101, 201 may include one or more transaction units 21, 22 and/or 23. The monetary value token unit 16 preferably supports at least the transaction protocol of the monetary value token transaction system 6, more preferably the protocols of both transaction systems 6, 7.

The monetary value token unit 16 may additionally comprise one or more normal monetary vale tokens 15. The normal monetary value tokens 15 are not part of a token data structure and thus can be used as usual in the monetary value token transaction system 6. A monetary value token transaction 301 using the normal monetary value token 15 may be an offline or an online transaction. A registration 65 of the normal monetary value token 15 will typically exist in the token (reference) register of the monetary value token transaction system 6.

The monetary value token unit 16 optionally comprises an electronic first access indicator 18b and/or an electronic access limitator. A first access could e.g. be indicated in a response message to a reading access of the token data structure, if this is the request is the first access. This variant is particularly useful, if the monetary value token unit 16 would not support one or both transaction protocols of the transaction systems 6, 7. The reading access may be e.g. limited to a single reading access, limited to a number of reading accesses or limited to reading access in a single (or a limited number of) communication session(s).

A first access indicator 18, 18a or 18b may also exist for a normal monetary value token 15 in a monetary value token device, even in the monetary value token devices 10 of Fig. 1-3. Within an offline transaction 301 the first access indicator initially indicates the un-accessed state of the monetary value token 15, which is transferred (read out or sent) in the transaction 301 from the monetary value token device to the terminal device 20. The terminal device 20 will only accept the monetary value token 15 in the offline transaction 101, if the first access indicator initially indicates the un-accessed state.

Fig. 3 illustrates a terminal device 20 including a dual use transaction unit 23 and an optional authentication token transaction unit 22. Hence, a normal offline (or online) authentication token transaction 401 may occur between the monetary value token transaction device 10 and the terminal device 20. The authentication token unit 17 of the monetary value token transaction device 10 for example generates a transaction authentication token for the transaction 401, preferably based on a transaction authentication token generation key. A transaction clearance message 405 follows for the authentication token transaction 401. Clearance authentication token transaction 401 (account-based settlement) is thus performed in the authentication token transaction system 7.

Moreover, steps 501 to 507 of a provisioning process of the token data structure 14 are illustrated in more detail in Fig. 3. A provisioning unit 50 (or a provisioning unit 64) may perform these steps for exactly one or alternatively for multiple token (data structure) issuers.

In a token data structure providing step 501 the token data structure 14 is either sent to monetary value token (transaction) device 10 or the monetary value token (transaction) device 10 is issued. For example the monetary value token voucher 10 or the monetary value token transaction device 10 may be produced and/or personalized in the provisioning unit 50, 64 and then distributed to an end user or to a selling entity selling the monetary value token device 10 to an end user.

At least one of the monetary value token transaction system 6 and/or the separate authentication token transaction system 7 has to be prepared 506, 507 for the alternative use of the monetary value token 11 and the transaction authentication token 12 of the token data structure 14 in a transaction 101, 201. Preferably both transaction systems 6, 7 are prepared.

In the preparation one or both tokens may be marked as a linked token. Hence, in the transaction system 6, 7 these tokens can be distinguished from normal tokens of the respective transaction system 6, 7. A link to the token 12, 11 of the other transaction system 7, 6 may be added to the token 11, 12 of the transaction system 6, 7. The marker and the link may be independent from each other, however the link of a token may already form a marker. The link may for example comprise a reference of the token data structure, a link number common to both tokens or a token reference of the other token. Preferably, the registration 61, 72 of the token 11, 12 in the transaction system 6, 7 is marked or supplemented with a link. However, the markers and/or links could also be stored separately.

After a use of one of both tokens 11, 12 of the token data structure 14 - in a transaction 201 of the separate authentication token transaction system 7 or in a transaction 101 of the monetary value token transaction system 6, an unused of both tokens 12, 11 is partially or fully cancelled in his transaction system 7, 6. A cancellation message 106, 206, 107, 207 may be received and processed in the other transaction system 7, 6. The transaction system 6, 7 of the first transaction 101, 201 may send the cancellation message 107, 207 to the other transaction system 7, 6. Alternatively the cancellation message 106, 206 may be received from a transaction device 10, 20, 30.

For example, after a first offline transaction 201 of the authentication token transaction system 7, the authentication token transaction system 7 may receive the authentication token transaction clearance message 205 for the first offline transaction 201. The monetary value token transaction system 6 receives the cancellation message 206 or 207. Cancellation message 206 may include e.g. the reference of the monetary value token 11 and triggers the (full or partial) cancellation (depending on the value of the first transaction 201). The monetary value token transaction system 6 checks if the monetary value token 11 (its registration 61) is a linked token and either deletes or invalidates the monetary value token 11 for the monetary value token transaction system 6 or changes the value of the registered monetary value token 11 to a reduced value (in its registration 61). If the monetary value token transaction system 6 receives a registration replacement request 104 (or an redemption request 105) for the monetary value token 11, it will process the request and in addition check, if the monetary value token 11 is a linked token (marker/link). For linked tokens/tokens of a token data structure the transaction system 6, 7 will send the cancellation message 107, 207 to the other transaction system 7, 6, when being informed 104, 105, 205 about the use of the token 11, 12 of a data structure 14 in the first transaction 101, 201.

If the first transaction 101, 201 has a value lower than the initial value of the token data structure 14, a token of a reduced value (initial value minus first transaction value) may be created in the monetary value token device 10. Particularly, the value of the other token of both tokens 11, 12 may be changed. However, within a first monetary value token transaction 101, a monetary value token of a reduced value may be created based on the monetary value token 11. Since the same value reduction occurs in the corresponding transaction system 6, 7 (due to messages 104-107 or 205-207) the token of the reduced value can be used in a subsequent (online or offline) transaction 103.

The monetary value token transaction system 6 illustrated in Fig. 3 comprises the monetary value token registration 61 of the monetary value token 11 of the token data structure 14 and the monetary value token registration 65 of the normal monetary value token 15. Monetary value token transaction device (s) 10 may use normal monetary value token 15 in a monetary value token transaction 301 (offline or online). The tokens 11, 15 of the transaction system 6 may be registered in a token (reference) register of the monetary value token transaction system 6. Cancellation unit 63, provisioning unit 64 and a token issuer unit 66 are further optional units in the monetary value token transaction system 6.

In first variants the monetary value token transaction system 6 comprises multiple token issuers (and respective token issuer units 66) each providing token data structures (token issuer = token data structure issuer). The multiple token issuers may have separate provisioning units 64 or use a common provisioning unit 50. In second variants the monetary value token transaction system 6 comprises a single token issuer (and thus a single token issuer unit 66) and multiple token data structure issuers each providing token data structures (monetary value token issuer <> token data structure issuer). In a third variant a single token issuer (issuer unit 66) and a single token data structure issuer (provisioning unit 64 or 50) may exist.

In the overall system different authentication token transaction systems or authentication token issuers may exist. Hence, token data structures may comprise transaction authentication tokens of different authentication token transaction systems or authentication token issuers.

In the step of preparing 506 the monetary value token transaction system 6, the provisioning unit 50, 64 may use a monetary value token freshly issued by the token issuer unit 66. Preferably, however the provisioning unit 50, 64 creates the monetary value token 11 of the token data structure 14 based on an existing monetary value token. In particular the provisioning unit 50, 64 may register the at least one created monetary value token 11 by sending a replacement request to the token (reference) register.

In the step of preparing 507 the authentication token transaction system 7, the provisioning unit 50, 64 preferably uses the pre-generated transaction authentication token 12 generated by the authentication token transaction system 7 (using e.g. a generation key). Alternatively only, the provisioning unit 50 uses the generation key to generate multiple transaction authentication tokens 12, which are then registered and/or marked in the preparation. The provisioning unit 50, 64 prepares 506, 507 the transaction system 6, 7 at least after (and/or before) providing 501 the token data structure 14. For example, registration before and marking (or adding the link) after the step of providing 501.

### REFERENCE SIGNS

- 10: monetary value token device
- 11: monetary value token
- 12: transaction authentication token
- 14: token data structure
- 18, 18a: first access indicator
- 20: transaction terminal
- 21: monetary value token transaction unit
- 22: transaction authentication token transaction unit
- 6: monetary value token transaction system
- 61: registered monetary value token
- 63: cancellation unit
- 7: authentication token transaction system
- 72: registered authentication token information
- 73: cancellation unit
- 101: offline monetary value token transaction
- 104: registration replacement request
- 105: redemption request
- 107: authentication token cancellation
- 201: offline authentication token transaction
- 205: transaction clearance request
- 207: monetary value token cancellation

- 30: user device
- 33: dual use transaction unit
- 64: dual use provisioning unit
- 102: token data structure reading
- 106: authentication token cancellation
- 111: monetary value token transaction
- 15: monetary value token
- 16: monetary value token application
- 17: authentication token application
- 18b: access limitator
- 23: dual use transaction unit
- 50: provisioning unit
- 65: registered monetary value token
- 66: monetary value token issuer unit
- 75: registered authentication token information

- 103, 301: monetary value token transaction
- 206: monetary value token cancellation
- 401: authentication token transaction
- 405: authentication token clearance
- 501: token data structure provisioning
- 506: monetary value token preparation/registration
- 507: authentication token information preparation/registration

## Claims

1. A monetary value token device (10), comprising:
a token data structure (14) including
a monetary value token (11) of a monetary value token transaction system (6); **characterized in that**
the token data structure (14) further includes a transaction authentication token (12) of a separate authentication token transaction system (7); wherein
the token data structure (14) enables the monetary value token device (10) to be alternatively used in a transaction (101) of the monetary value token transaction system (6) or in a transaction (201) of the separate authentication token transaction system (7).

2. The monetary value token device (10) of claim 1, **characterized in that**
the transaction (101) of the monetary value token transaction system (6) and the transaction (201) of the separate authentication token transaction system (7) are offline transactions (101, 201); and/or
at least one, preferably both, of the monetary value token (11) and the transaction authentication token (12) is a token usable in only a single transaction.

3. The monetary value token device (10) of one of the preceding claims, **characterized in that**
the monetary value token device (10) is a voucher providing the token data structure (14), preferably in a form readable by a user device (30) and/or a terminal device (20) being adapted to perform the transaction (101; 201); or
the monetary value token device (10) is a transaction device, preferably adapted to perform a monetary value token transaction (101) with a terminal device (20) and more preferably in the transaction (201) of the separate authentication token transaction system (7) with a terminal device (20) further adapted to provide the transaction authentication token (12) or to perform the transaction authentication token transaction (201).

4. The monetary value token device (10) of one of the preceding claims, **characterized by** a first access indicator (18) indicating if the token data structure (14) is accessed for the first time,
the first access indicator (18) preferably being a visible first access indicator (18a) and/or an electronic signal first access indicator (18b).

5. The monetary value token device (10) of one of the preceding claims, **characterized by** an access limitator limiting access to the token data structure (14)
- such that only either the monetary value token (11) or the transaction authentication token (12) of the token data structure (14) can be accessed; and/or
- such that the time or number of subsequent accesses to the token data structure (14) is limited.

6. The monetary value token device (10) of one of the preceding claims, **characterized in that**
the monetary value token (11) comprises a value data element indicating an initial value of the monetary value token (11), wherein
- the transaction authentication token (12) can be used for transactions in the separate authentication token transaction system (7) having a maximum transaction value corresponding to the initial value; and/or
- after the transaction (201) of the separate authentication token transaction system (7) having a first transaction value, the monetary value token device (10) changes the value data element of the monetary value token (11) to indicate a reduced value, corresponding to the initial value reduced by the transaction value.

7. The monetary value token device (10) of one of the preceding claims, **characterized in that**
the token data structure (14) comprises:
- at least one system indicator data element indicating the separate authentication token transaction system (7) and/or the monetary value token transaction system (6) and/or
an issuer of the token data structure (14); and/or
- at least one pre-formatted transaction message including the monetary value token (11) and/or the transaction authentication token (12).

8. The monetary value token device (10) of one of the preceding claims, **characterized by** further comprising
- one or more normal monetary value tokens (15) of the monetary value token transaction system (6); and/or
- a monetary value token application (16) of the monetary value token transaction system (6), preferably including the one or more normal monetary value tokens (15) and/or the token data structure (14); and/or
- a transaction authentication token application (17) of the separate authentication token transaction system (7), preferably generating and/or providing (301) one or more transaction authentication tokens (75).

9. The monetary value token device (10) of one of the preceding claims, **characterized in that**
- the monetary value token (11) comprises one or more of the following data elements: a value data element, a token owner secret, preferably a secret key of a key pair, a token reference, preferably derived from the token owner secret and/or a public key of a key pair, and a token issuer information, and/or
- the transaction authentication token (12) comprises an account number, preferably a derived account number or one-time account number, a system generated secret authentication value and a maximum transaction value; and/or
- the separate authentication token transaction system (7) is a credit card system; and/or
- the monetary value token transaction system (6) comprises one or more token issuers (66) and/or a token reference register.

10. A secure device (20; 30) comprising a dual use transaction unit (23; 33) adapted to use the token data structure (14) provided by a monetary value token device (10) according to one of the preceding claims.

11. A provisioning method comprising the steps:
- providing (501) a monetary value token (11) of a monetary value token transaction system (6) to a monetary value token device (10);
**characterized in that**
the monetary value token (11) is provided (501) in a token data structure (14) further comprising a transaction authentication token (12) of a separate authentication token transaction system (7); and
- preparing (506, 507) the monetary value token transaction system (6) and/or the separate authentication token transaction system (7) for the alternative use of the monetary value token (11) and the transaction authentication token (12) of the token data structure (14) in a transaction (101, 201).

12. The method according to claim 10 or 11, **characterized in that**
- the step of preparing (506, 507) comprises marking one or both tokens (11, 12) as a linked token and/or adding to one or both tokens (11, 12) a link to the token (12, 11) of the other transaction system (6, 7); and/or
- the step of preparing (506, 507) comprises
generating the monetary value token (11) for the token data structure (14) based on an existing monetary value token and/or registering at least the monetary value token (11) for the token data structure (14) by replacing a registered monetary value token; and/or
generating at least an authentication secret of the transaction authentication token (12) in the separate authentication token transaction system (7), preferably the authentication secret is derived from an account number and/or an authentication secret generation key in the separate authentication token transaction system (7).

13. The method according to one of claims 10 to 12, **characterized by**
- after use of one of both tokens (11, 12) of the token data structure (14) in a transaction (201) of the separate authentication token transaction system (7) or in a transaction (101) of the monetary value token transaction system (6), cancelling an unused of both tokens (11, 12) in the monetary value token transaction system (6) or the separate authentication token transaction system (7) respectively, preferably fully cancelling the transaction authentication token (12) or partially or fully cancelling the monetary value token (11); and/or
- sending (107, 207) a cancellation message from the monetary value token transaction system (6) to the separate authentication token transaction system (7) or vice versa; and/or
- receiving (106, 206) a cancellation message from a transaction device (20; 30) in the monetary value token transaction system (6) or the separate authentication token transaction system (7).

14. A provisioning unit (50, 64) adapted to perform the method according to one of claims 11 to 13, preferably adapted to perform the method for different token issuers (66) in the monetary value token transaction system (6).

15. A system comprising
- a monetary value token transaction system (6);
- a separate authentication token transaction system (7); and
- a monetary value token device (10) according to one of claims 1 to 9; and
optionally a secure device (20; 30) according to claim 10 or a provisioning unit (50,64) according to claim 14.

16. An offline payment method using a monetary value token device having a first access indicator (18), the monetary value token device including a monetary value token (15; 11) of a monetary value token transaction system (6), wherein the first access indicator indicates an un-accessed state of at least the monetary value token (15; 11); the method comprising:
- transferring the monetary value token (15; 11) in an offline transaction (301; 101) of a monetary value token transaction system (6) to a terminal device (20) after a change of the first access indicator (18) such that the first access indicator indicates an accessibility of the monetary value token (15; 11);
**characterized in that**
the offline transaction (301; 101) comprises the change of the first access indicator, whereby the un-accessed state of the monetary value token (15; 11) is indicated in the offline transaction (301; 101) in addition to the transfer of the monetary value token (15; 11) from the monetary value token device to the terminal device (20).
